# EUROPEAN PATENT APPLICATION

(11) **EP 1 832 762 A1**
(43) Date of publication of application: **12.09.2007**
(21) Application number: 06251288.4
(22) Date of filing: 10.03.2006
(51) Int. Cl.: F16C 33/30, F16C 19/54, B01J 3/04

(54) **Hybrid bearings**

(71) Applicant: Borealis Technology Oy, 06101 Porvoo (FI)
(72) Inventor: The designation of the inventor has not yet been filed
(74) Representative: Neath, Susannah Mairi

(57) **Abstract**

A polymerisation reactor 100 comprising a reactor housing containing a rotating device 101 which in use is rotated to circulate the contents of the housing, wherein at least one hybrid bearing 31, 32 is mounted to the rotating device to facilitate its rotation, said hybrid bearing comprising steel raceways 40 and ceramic balls 42. The use of hybrid bearings in such apparatus is unconventional due to the harsh environment of the reactor and the low rotational speeds at which the rotating device operates (below 1000rpm). The hybrid bearings are operated without a dedicated lubrication source. The hybrid bearings can be thrust bearings arranged in tandem and can be used in conjunction with a ceramic bearing which rests on the hybrid bearing.

## Description

The present invention concerns the use of hybrid bearings in applications having low rotational speeds and large thrust forces, such as autoclave reactors.

Autoclave reactors are used to produce polymers, such as polyethylene, at high pressures through free radical polymerisation. A typical autoclave reactor is approximately 7 metres in length, with a monomer feed inlet situated at the top of the reactor and a number of further monomer inlets located along at least the upper length of the reactor. Initiator inlets are also provided at several points along the reactor's length. Introducing the monomer and initiator at several stages creates a number of different reaction zones, which can be controlled by altering the feed flow and pressure at each inlet. A stirrer having inclined blades extends through the length of the reactor and is rotated by a motor situated at the top of the reactor. The stirrer circulates the monomer and initiator in a pattern dependent on the number and inclination of the blades to assist in the creation of different reaction zones and to stimulate polymerisation.

The created polymer is formed in a liquid state and falls to the bottom of the reactor where it is removed for further processing.

The total weight of the stirrer and motor is usually in excess of 700kg, e.g. 800kg. The stirrer is typically supported along its length at three locations using ball bearings. The top set of ball bearings are operatively connected to the motor while the others are located approximately at the middle and bottom of the stirrer. A further ball bearing arrangement is usually provided at the top of the motor.

Conventionally steel/steel ball bearings (i.e., ball bearings having steel raceways and balls) are used. These are cheap, readily available and furthermore can be shrunk fit onto the shaft of the rotor or stirrer to provide a secure attachment.

Autoclave reactors operate at high pressures, e.g. between 100-300 MPa (1020 - 3060 kg/cm²), and moderately high temperatures, e.g. 100-300°C. Further, no lubrication (such as oil) can be introduced into the reactor as this will contaminate the product output.

This makes the reactor a very hostile environment and leads to failure of the bearings after a relatively short time. If ball bearings do become damaged in the reactor, excess heat is produced which can cause degradation of the monomer feed. This in turn increases the pressure within the reactor and can cause reactor blow out. To prevent such occurrences, the performance of the ball bearings is monitored online through, for example, vibrations or energy consumption of the motor. When these increase past an acceptable limit this indicates that the ball bearings are failing and should be replaced. It has been found that the maximum operating life for bearings within an autoclave reactor is approximately 4000 hours. After this time the reactor must be shut down and the bearings replaced. Obviously any shut down of the reactor is disadvantageous as it limits the polymer production rate. In addition, frequent replacement of ball bearings increases the running cost of the reactor.

Other types of ball bearing exist and are used in different fields. For example, ceramic/ceramic ball bearings are known. These are stronger than steel/steel ball bearings and therefore have a longer operational life. However, these have the disadvantage that they cannot be shrunk fit in the same way that steel ball bearings can. They are also more expensive than steel bearings.

Therefore there exists a need to improve the operational life of ball bearings within an autoclave reactor.

According to the present invention there is provided a reactor comprising a reactor housing containing a rotating device which in use is rotated to circulate the contents of the housing, wherein at least one hybrid bearing is mounted to the rotating device to facilitate its rotation, said hybrid bearing comprising steel raceways and ceramic balls.

The use of hybrid ball bearings (i.e. steel raceways, ceramic balls) is known in unrelated technical fields. Such ball bearings are disclosed, for example, in WO01/20181, EP1009086, EP1217235 and US6,478,553.

The above listed disclosures relate to uses, such as in spindle motors for hard drives or automotive engines, in which high rotational forces (i.e. over 5000 rpm) are applied to the bearings. Due to the increased strain this places on the bearing ceramic balls are used. In addition oil, grease or other materials are used as lubricants. Indeed, in each of the above disclosures concerning hybrid bearings a supply of lubricant is provided to the bearings in order to ensure correct operation.

However, as discussed above it is not possible to use lubricant within an autoclave reactor, or many other reactors, in particular polymerisation reactors, due to the risk of output contamination.

The inventors of the present invention have realised that it is possible to use hybrid ball bearings in a reactor without the need to provide a conventional or dedicated lubrication source, i.e. material specifically introduced into the reactor to lubricate the ball bearings rather than to take part in or influence the reaction process. This exclusion extends to lubricant contained within or added to the bearings prior to their insertion within the reactor. It also includes any dedicated lubrication device provided within the reactor housing, specifically within the motor housing, to supply lubricant to the bearings. Instead the monomer which is fed into the reactor can provide sufficient lubrication to enable the hybrid ball bearings to outperform steel bearings. Therefore, preferably the hybrid ball bearing has no dedicated source of lubrication. Preferably the reactor housing does not contain a lubrication device for supplying dedicated lubricant to the bearings.

Hybrid bearings within the prior art are used in fields in which the bearings must cope with high speed rotations. In autoclave and other reactors the stirrer is usually rotated below 850rpm. Therefore the use of hybrid bearings in such a system is unconventional and has not previously been considered. However, the inventors have realised the unexpected benefits of doing so. Instead of using the strength of the hybrid bearings to withstand high rotational speeds, these instead assist in reactors by withstanding the weight of the rotating device. As the rotating device is rotated at low speeds, it is this weight that provides the greatest force experienced by the bearings during use. Therefore preferably the rotating device is arranged to rotate below 1000rpm throughout normal use, i.e. during the course of normal operation the rotating device is never rotated above this speed. Preferably the weight of the rotating device is greater than 100kg, more preferably greater than 400kg and most preferably greater than 700kg.

Hybrid ball bearings have several advantages in the context of reactors. Firstly, they are stronger than steel ball bearings but can still be attached via shrink fitting. Secondly, any faults appearing in the steel races during use will be rolled out by the harder ceramic ball bearings, thus preventing cracking and failure.

It has been speculated that conduction of electricity through ball bearings can increase their degradation. The use of insulating ceramic balls therefore prevents this additional source of degradation.

Many types of reactors involve the operation of low speed rotating devices in high temperature/ high pressure environments in which a dedicated lubrication source cannot be used. Some examples of reactors that would benefit from the inclusion of hybrid bearings are stirred tank and loop reactors for making polypropylene, polyethylene and polyvinylchloride. Here the rotating device comprises a circulating pump with an impeller/propeller. The use of a hybrid bearing operatively mounted to this impeller/propeller is advantageous, in particular when the bearing is operating within the process contents of the reactor and therefore cannot be lubricated with a dedicated lubricant.

The rotating device may simply be a stirrer, or impeller/propeller or it may be a stirrer and motor assembly. It is not necessary for the whole of the rotating device to be contained within the reactor, for example in some situations the driving motor will be located outside the reactor housing with the stirrer or impeller connected to this and extending into the reactor. The important feature is that the hybrid bearing mounted to the rotating device is located within the harsh reactor environment.

Preferably the reactor is arranged to operate at pressures greater than 50MPa, most preferably greater than 100MPa. Preferably the reactor is arranged to operate at a temperature of 100-600°C, most preferably between 100-300°C. Preferably the reactor is a polymerisation reactor.

Autoclave reactors present a particularly harsh environment and therefore the provision of hybrid bearings within such a reactor is particularly preferred.

Preferably the rotating device comprises a stirrer motor and a stirrer connected to the rotor of the motor, the at least one hybrid bearing being operatively mounted to the motor. This means that the hybrid bearing can be mounted to the motor housing and the motor rotor or stirrer shaft. Preferably the motor is located at the top of the reactor housing and the stirrer extends down through substantially the length of the housing. Lower regions of the reactor contain more reactants and liquid polymer which can act as a lubricant to the bearings positioned at the middle and bottom of the stirrer. However, at the top of the reactor there is only a single flow of monomer and hence the provision of the stronger hybrid bearings at this location is most beneficial.

Hybrid bearings can be operatively mounted to the top or base of the motor, preferably both. Preferably a hybrid bearing is operatively connected to the base of the motor, most preferably a thrust bearing. This allows the bearing to better cope with the large thrust force placed upon it by the weight of the motor and stirrer assembly. As mentioned previously, hybrid bearings are usually used in applications involving high rotational speeds. This is particularly true of hybrid thrust bearings. In this instance however, thrust bearings are used despite the low rotational speeds due to the weight of the apparatus. The use of hybrid thrust bearings to counteract large weights rather than rotational speeds is also unconventional and not seen in the prior art. Therefore, more generally, the hybrid bearing is preferably a thrust bearing arranged to counteract the weight of the rotating device. Preferably the rotating device is arranged to rotate at low speeds throughout normal use such that the majority of the thrust felt by the bearing is generated by the weight of the rotating device.

As less thrust is placed upon the bearing mounted at the top of the motor this has traditionally been a roller bearing. However, in the present invention preferably a hybrid bearing is operatively mounted to the top of the motor and most preferably is a radial bearing. Such bearings are able to cope with the small amounts of thrust which are occasionally felt by the bearing in an upwards direction due to the movement of the reactants and polymer within the reactor.

In order to cope with the stronger forces encountered by the bearing mounted to the base of the motor it is preferable for a second bearing to mounted in combination with the first. Preferably this bearing is also a thrust bearing. In one preferred embodiment this second bearing is also a hybrid bearing in order that the same advantages as mentioned above are obtained.

Traditionally thrust bearings are mounted in pairs and arranged in opposing directions, known as a "face-to-face" arrangement. This allows the bearing arrangement to resist thrust forces in either direction equally well. The two bearings at the base of the motor can be arranged in this way.

However, as the motor is rotated at low speeds, the majority of the thrust felt by the bearings is due to gravity acting on the mass of the motor and stirrer. Therefore, preferably the bearings are mounted in a tandem arrangement. This means the bearings are arranged such that their thrust faces both counter force in the same direction, i.e., in the case of the present invention the downwards direction. As no great upwards force is experienced there is no need to provide a thrust bearing to counter force in this direction. The small upward forces occasionally caused by the movement of reactants and polymer within the reactor can be countered by the radial bearing at the top of the motor and/or the small shoulders opposite the thrust faces of the thrust bearings, which are similar to the shoulder found on a radial bearing.

This is considered inventive in its own right and therefore, viewed from a further aspect the present invention provides a reactor comprising a reactor housing containing a rotating device, and a bearing arrangement operatively connected to the rotating device to facilitate its rotation, said arrangement comprising two or more thrust bearings in a tandem arrangement such that each bearing bears the thrust acting in a downwards direction.

Preferably at least one ball bearing is a hybrid bearing. Preferably the weight of the rotating device is greater than 100kg, more preferably greater than 400kg and most preferably over 700kg, and is arranged to rotate at below 1000rpm throughout normal operation, preferably below 850rpm, such that the majority of the thrust felt by the bearing arrangement is generated by the weight of the rotating device. Preferably the rotating device is a motor and stirrer assembly and the reactor is an autoclave reactor.

As mentioned above, completely ceramic ball bearings have a greater strength than hybrid bearings and therefore it would be beneficial to include such bearings in the reactor. However, unlike steel and hybrid bearings, ceramic bearings cannot be fastened to the stirrer by shrink fitting. Instead bearing nuts or steel fastening collars must be used, increasing the components in the reactor and therefore introducing possible points of failure.

Preferably therefore the reactor of the present invention further comprises at least one ceramic ball bearing arranged such that it rests on top of the at least one hybrid ball bearing.

Preferably the ceramic bearing and the hybrid bearing are thrust bearings operatively mounted to the base of the motor.

In this way a ceramic ball bearing can be used in the reactor without the need for additional fixing parts. Instead the ceramic bearing is held in place by the hybrid bearing positioned beneath it. During use of the reactor the expansion of the stirrer or rotor shaft creates an interference fit between the shaft and the ceramic ball bearing.

This is seen as inventive in its own right and therefore, according to a further aspect of the present invention there is provided a reactor comprising a reactor housing containing a rotating device and a bearing arrangement having a hybrid bearing and a ceramic bearing, said bearing arrangement being operatively mounted to said rotating device, said hybrid bearing being mounted to the rotating device below said ceramic bearing such that said ceramic bearing rests upon the hybrid bearing.

Viewed from another aspect the present invention comprises a ball bearing assembly for a reactor comprising a ceramic ball bearing and a hybrid ball bearing, the hybrid ball bearing comprising ceramic balls and steel races and being arranged such that, in use, the ceramic ball bearing is supported by the hybrid ball bearing.

In this way the ball bearing assembly can be attached to the shaft of the stirrer or motor rotor through shrink fitting, using the steel races of the hybrid bearing. The ceramic bearing is held in place by the hybrid bearing and provides increased strength for the assembly.

It has been found that hybrid ball bearings have a lifetime of two to ten times that of standard steel ball bearings in an autoclave reactor environment, over 9,000 hours, representing a vast reduction in the down time associated with the reactor and consequently an increase in productivity.

Viewed from another aspect the present invention provides a method of polymerisation comprising the step of introducing monomer and initiator into the reactor of the present invention. Preferably no dedicated lubricant is introduced into the reactor. Preferably the reactor is operated at a pressure of between 100-300MPa. Preferably the temperature is maintained above 100°C. Preferably the rotating device is rotated at less than 1000rpm throughout the polymerisation process. Preferably the monomer is ethylene. Preferably the method is used to produce low density polyethylene in an autoclave reactor.

Viewed from a further aspect the present invention comprises the use of hybrid bearings within a reactor to support a mixing device. Preferably the reactor is an autoclave reactor.

The inventive concept of using hybrid bearings in low speed/ high thrust environments can be applied more generally. For example, extruder screws are also rotated at low speeds. In addition during use back pressure is generated, resulting in a thrust force along the shaft of the screw. Therefore, viewed from another aspect the present invention provides a motor arranged to rotate below 1000rpm throughout normal use, said motor comprising a hybrid bearing arrangement. Preferably the motor is arranged to rotate at between 10-1000 rpm, more preferably between 100-900 rpm and most preferably between 600-850rpm. Preferably the motor does not have a dedicated lubrication source for lubricating the bearing arrangement.

Viewed from another aspect the present invention provides an autoclave reactor comprising a reactor housing containing a motor and a stirrer assembly, the motor being housed at the top of the reactor and arranged to rotate the stirrer at below 1000rpm, the stirrer being connected to the rotor of the motor and extending down through substantially the length of the housing, said reactor further comprising a plurality of monomer feed inlets and a plurality of initiator feed inlets located along at least the upper length of the reactor housing, at least one of said monomer feed inlets being located so as to introduce monomer into the reactor housing above said motor, wherein at least one hybrid bearing is operatively mounted to said motor, said hybrid bearing comprising steel raceways and ceramic balls.

Preferred embodiments of the invention will now be described, by way of example only, with reference to the accompanying drawings, in which
FIG 1 shows a diagram of an autoclave reactor according to the present invention;
FIGs 2A and 2B show thrust bearings in a "face-to-face" and tandem arrangement respectively; and
FIG 3 shows a graph comparing the performance of the hybrid bearings and steel bearings within an autoclave reactor.

The autoclave reactor comprises a main reactor 100 provided with a stirrer, or mixing device 101, and a feed manifold 13 having branched off lines, each equipped with a regulating valve 14-19. The pressure in the manifold 13 is kept at such a level that the pressure drop over each regulating valve 14-19 becomes as low as practically possible. The initiator is fed to the reactor by the use of pumps 20-22. The pressure inside the reactor 100 is controlled by an outlet valve 10 which also serves to allow the created polymer to be removed from the reactor 100.

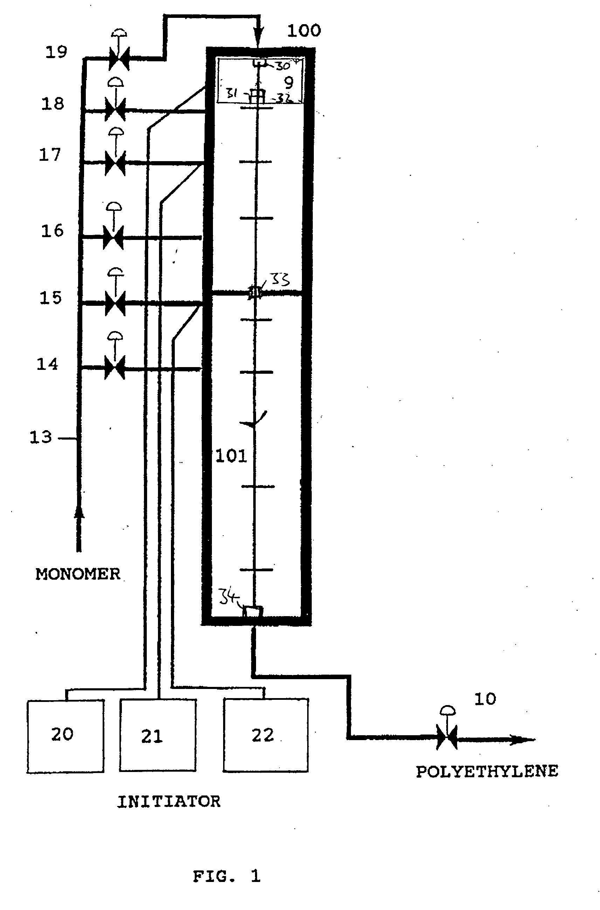

A typical reactor, such as the one shown in FIG 1, may be subdivided into, e.g. three reaction zones: a top zone, a middle zone and a bottom zone. However, it is contemplated that some reactors may have more than three reaction zones, while others may have less.

Monomer is fed in to the top zone through lines 18 and 19, and initiator is supplied by pump 20. The middle reaction zone comprises monomer feed inlets 16 and 17, with their respective valves, and an initiator feeding pump 21 while the bottom zone comprises two monomer feed inlet lines 14 and 15 with their respective valves and an initiator feeding pump 22.

The reaction zones are determined by the circulation pattern created by stirrer 101 and the walls of the reactor 100. The circulation pattern will depend on the inclination of the blades on the stirrer 101. The stirrer 101 is rotated at approximately 850rpm by motor 9, housed at the top of the reactor 100.

The motor 9 and stirrer 101 are supported by ball bearings 30-34 located at the top and base of the motor and at the middle and bottom of the stirrer.

A radial hybrid bearing 30 is located at the top of the motor 9 to facilitate rotation of the motor rotor. Bearing 30 can cope with small amounts of upward thrust generated by the movement of the contents of the reactor 100. Two thrust hybrid bearings 31, 32 are located at the base of the motor 9. The remaining bearings 33, 34 are located at the middle and bottom of the stirrer 101 respectively and can also be hybrid bearings.

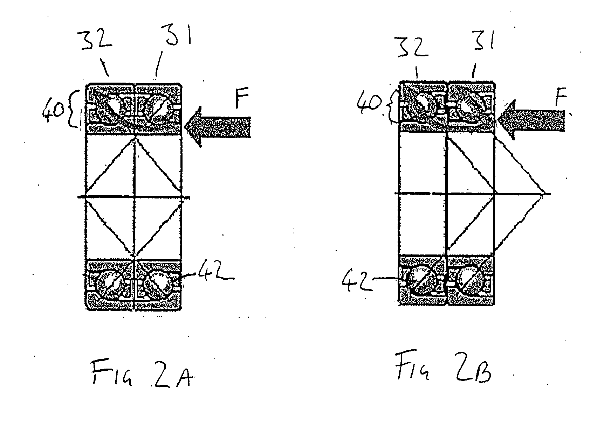

FIGs 2A and 2B show the bearings 31, 32 in more detail. The hybrid bearings comprise steel raceways 40 and ceramic balls 42. These balls are made of a strong, non-porous, insulating ceramic material, such as silicon nitride, and provide a longer lasting bearing than can be achieved with steel balls.

Thrust bearings 31, 32 can be arranged in two ways. Firstly, as shown in FIG 2A, the two bearings 31, 32 can be placed in a face-to-face arrangement. Here the thrust faces of the bearings face in opposite directions, such that each bearing counters thrust from a different direction. However, in preferred embodiments the bearings are arranged as shown in FIG 2B. Here the thrust faces are both facing the same direction and so both counter thrust forces from a single direction. This arrangement is beneficial in autoclave reactor 100 as the thrust force in the downward direction (arrow F) is much greater than the force in the upward direction. Therefore, by arranging bearings 31, 32 in tandem both bearings work to counteract the downward thrust caused by the combined weight of the motor 9 and stirrer 101. The smaller shoulders of the thrust bearings 31, 32 and of radial bearing 30 can cope with the smaller upward thrust forces.

Although no dedicated lubricant can be added to the reactor 100, the monomer fed in to the reactor 100 through feed inlet 19 provides some basic lubrication to bearings 30, 31, 32 and also cools the motor.

In order to further improve the strength of the bearing assembly, bearing 31, which is positioned on top of bearing 32, can be a fully ceramic bearing. Hybrid bearing 32 is shrunk fit onto the rotor or stirrer shaft and the ceramic bearing rested on top of this. During use the shaft expands due to the high temperatures within the reactor creating an interference fit between the ceramic bearing and the shaft.

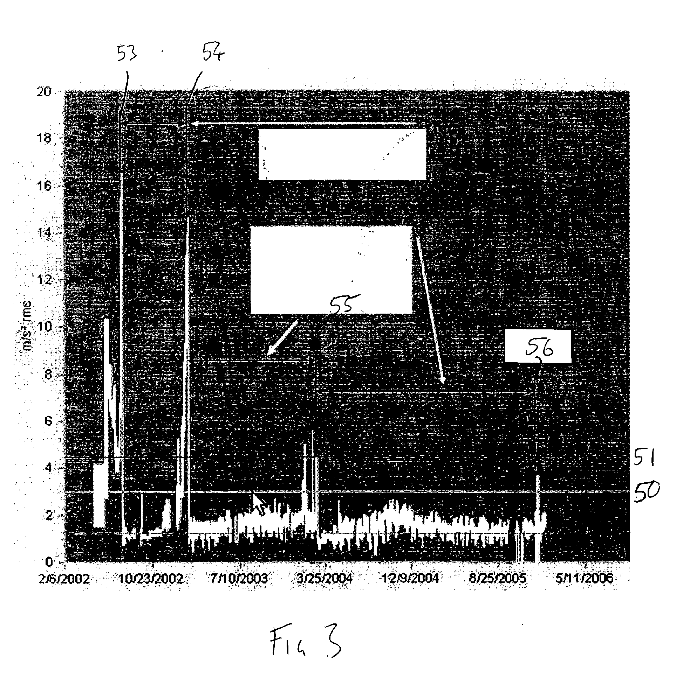

FIG 3 shows a graph comparing the operating lifetimes of both steel and hybrid bearings within an autoclave reactor. This graph plots the vibration of the motor and stirrer assembly over time. Line 50 is an alert level and line 51 the danger level. Initially steel bearings are used. At point 53 there is a spike in the vibration reading which indicates the bearings must be replaced. After 6 months, or 4300 operational hours, these new bearings also produced vibrations which were over the danger limit 51, as seen at point 54. The ball bearings were then replaced with hybrid bearings. The length of time between point 53 and 54 is 12 months, or 9000 operational hours, while the interval between point 54 and 55 (during which hybrid bearings were again used) increases to 19 months, or 14000 operational hours. It is also noticeable that the vibrations caused by the hybrid bearings do not increase as dramatically as the vibrations caused by the steel bearings and hence the danger of allowing the hybrid bearings to operate up until fatigue is not so great.

Therefore is has been shown that the use of hybrid bearings within an autoclave reactor results in a greatly increased operational lifetime. Similar beneficial results can be achieved using hybrid ball bearings in different types of reactors.

## Claims

1. A reactor comprising a reactor housing containing a rotating device which in use is rotated to circulate the contents of the housing, wherein at least one hybrid bearing is mounted to the rotating device to facilitate its rotation, said hybrid bearing comprising steel raceways and ceramic balls.

2. A reactor as claimed in claim 1 wherein the at least one hybrid bearing has no dedicated lubrication source.

3. A reactor as claimed in claim 2 wherein said reactor does not comprise a dedicated lubrication device for lubricating said hybrid bearing.

4. A reactor as claimed in claim 1, 2 or 3 wherein the rotating device is arranged to rotate below 1000rpm.

5. A reactor as claimed in any preceding claim wherein the weight of the rotating device is greater than 700kg.

6. A reactor as claimed in any preceding claim wherein the rotating device comprises a stirrer motor and a stirrer connected to the rotor of the motor, the at least one hybrid bearing being operatively mounted to the motor.

7. A reactor as claimed in claim 6 wherein the motor is located at the top of the reactor housing and the stirrer extends down through substantially the length of the housing.

8. A reactor as claimed in claim 6 or 7 wherein a hybrid bearing is operatively mounted to the top of the motor.

9. A reactor as claimed in claim 8 wherein said hybrid bearing is a radial bearing.

10. A reactor as claimed in any of claims 6 to 9 wherein a hybrid bearing is operatively mounted to the base of the motor.

11. A reactor as claimed in claim 10 wherein said hybrid bearing is a thrust bearing.

12. A reactor as claimed in claim 10 or 11 wherein a second bearing is mounted in combination with said hybrid bearing.

13. A reactor as claimed in claim 12 wherein said second bearing is a hybrid bearing.

14. A reactor as claimed in claim 12 or 13 wherein said hybrid bearing and said second bearing are thrust bearings arranged in tandem such that the thrust faces of both bearings carry the weight of the motor and stirrer assembly.

15. A reactor as claimed in any preceding claim wherein said reactor is an autoclave reactor.

16. A reactor as claimed in any of claims 6 to 15 wherein the motor is arranged to rotate the stirrer at less than 850rpm.

17. A reactor as claimed in any preceding claim further comprising at least one ceramic bearing positioned above the at least one hybrid bearing such that the ceramic bearing rests upon the hybrid bearing.

18. A reactor as claimed in any preceding claim having a continuous operating time of over 6000 hours.

19. A reactor as claimed in claim 18 having a continuous operating life of over 10000 hours.

20. A reactor comprising reactor housing containing a rotating device and a bearing arrangement operatively connected to the rotating device to facilitate its rotation, said arrangement comprising two or more thrust bearings in a tandem arrangement such that each bearing bears the thrust acting in a downwards direction.

21. A reactor as claimed in claim 20 wherein at least one bearing is a hybrid bearing.

22. A reactor as claimed in claim 21 wherein each ball bearing is a hybrid bearing.

23. A reactor as claimed in claim 21 wherein a ceramic bearing is positioned above said hybrid bearing such that it rests upon it.

24. A reactor as claimed in any of claims 20 to 23 wherein the weight of the rotating device is greater than 100kg and said device is arranged to rotate at below 850rpm such that the majority of the thrust felt by the bearing arrangement is generated by the weight of the rotating device.

25. A reactor as claimed in any of claims 20 to 24 wherein said reactor is an autoclave reactor.

26. A reactor comprising a reactor housing containing a rotating device and a bearing arrangement having a hybrid bearing and a ceramic bearing, said bearing arrangement being operatively mounted to said rotating device, said hybrid bearing being mounted to the rotating device below said ceramic bearing such that said ceramic bearing rests upon the hybrid bearing.

27. A method of polymerisation comprising the step of introducing monomer and initiator into a reactor as claimed in any preceding claim.

28. A method as claimed in claim 27 wherein no dedicated lubrication for the bearings is introduced into the reactor.

29. A motor arranged to rotate below 1000rpm, said motor comprising a hybrid bearing arrangement.

30. A motor are claimed in claim 29 wherein no dedicated lubrication source is provided to lubricate the bearing arrangement.

31. A motor as claimed in claim 29 or 30 wherein said motor is a stirrer motor.

32. A motor as claimed in claim 29, 30 or 31 wherein said hybrid bearing arrangement comprises at least two thrust bearings operatively connected to the motor in a tandem arrangement.

33. A motor as claimed in any of claims 29 to 32 wherein said hybrid bearing arrangement further comprises a ceramic ball bearing.

34. A motor as claimed in any of claims 29 to 33 wherein said motor is located within a reactor housing.
